# EUROPEAN PATENT SPECIFICATION

(11) **EP 1 146 683 B1**
(45) Date of publication and mention of the grant of the patent: **09.03.2005**
(21) Application number: 01303442.6
(22) Date of filing: 12.04.2001
(51) Int. Cl.: H04L 1/16, H04L 1/18

(54) **Retransmission control method and system for multicast service**
Wiederübertragungskontrollverfahren und -System für Mehrfachübertragungsdienst
Procédé et système de commande de retransmission pour service multidiffusion

(30) Priority: 13.04.2000 JP 2000112700
(43) Date of publication of application: 17.10.2001
(73) Proprietor: NTT DoCoMo, Inc., Tokyo 100-6150 (JP)
(72) Inventor: Sato, Hijin, Yokohama-shi, Kanagawa 234-0054 (JP); Shimada, Kobaruto, Yokosuka-shi, Kanagawa 238-0012 (JP); Umeda, Narumi, Yokohama-shi, Kanagawa 236-0032 (JP); Yamao, Yasushi, Yokosuka-shi, Kanagawa 239-0822 (JP)
(74) Representative: Luckhurst, Anthony Henry William

(56) References cited:
- US-A- 4 901 313
- US-A- 5 636 230
- HASHIMOTO T ET AL: "PERFORMANCE EVALUATION OF RELIABLE MULTICAST COMMUNICATION PROTOCOLS UNDER HETEROGENEOUS TRANSMISSION DELAY CIRCUMSTANCES" IEICE TRANSACTIONS ON COMMUNICATIONS, INSTITUTE OF ELECTRONICS INFORMATION AND COMM. ENG. TOKYO, JP, vol. E82-B, no. 10, October 1999 (1999-10), pages 1609-1617, XP000928675 ISSN: 0916-8516
- LEE T-H ET AL: "PERFORMANCE OF SOME MULTIDESTINATION GBN ARQ PROTOCOLS UNDER UNEQUAL ROUND-TRIP DELAYS" IEICE TRANSACTIONS ON COMMUNICATIONS, INSTITUTE OF ELECTRONICS INFORMATION AND COMM. ENG. TOKYO, JP, vol. E76-B, no. 11, 1 November 1993 (1993-11-01), pages 1352-1362, XP000425068 ISSN: 0916-8516

## Description

### BACKGROUND OF THE INVENTION

### 1. Field of the Invention

The present invention generally relates to a retransmission control method in a multicast service providing system. More particularly, the present invention is concerned with a method of retransmitting multicast information when multicast information has not been duly received by a radio terminal in a multicast service providing system multicast information from an information delivery apparatus is delivered to radio terminals via radio sections.

The present invention also relates to an information delivery apparatus and a radio terminal that perform processing in accordance with the above retransmission control method.

### 2. Description of the Related Art

Recently, the IP (Internet Protocol) network has come into wide spread as a backbone network in an access system. IGMP (Internet Group Management Protocol) is known as a protocol of multicast service that can be implemented on the IP network. The IGMP defines a process for determining whether a router sends multicast information to a sub-network in order to avoid congestion of communications in the network.

The ways of providing reliable multicast service have been studied in order to improve the reliability of multicast service. The ways of providing reliable multicast service can be defined as an end-to-end retransmission control used in a layer higher than the IP layer, namely, the transport layer. Principally, multicast is capable of delivering information to an innumerable number of terminals. If part of the multicast information, more particularly, one of packets that form information is lost in delivery to the innumerable number terminals, these terminals will send a control signal for retransmission control. This would result in congestion of communications. Therefore, one of the major technical issues about reliable multicast service is to avoid occurrence of congestion caused by control information such as a signal that requests retransmission.

Under the above-mentioned circumstance, the multicast service providing system has been required to have improvements as to how a router collects retransmission requests in the sub-network and sends collected requests to an upper network. However, in practice, an end server in multicast handles retransmission, and the router does not restrict end terminals in the sub-network to send requests for retransmission. The router has an important role of transferring information to an upper network without overlapping of information and transferring retransmission information from the upper network to the sub-network without overlapping of retransmission information.

In a case where radio communications are applied to the access system, retransmission control in multicast service in a radio section has not been considered because of expected degradation of efficiency of use of radio resources and complexity in control. If the way of reliable multicasting is applied to the radio section, control signals involved in retransmission request sent by radio terminals will be restricted. Otherwise, the radio section would be congested. This will be described immediately below in more detail.

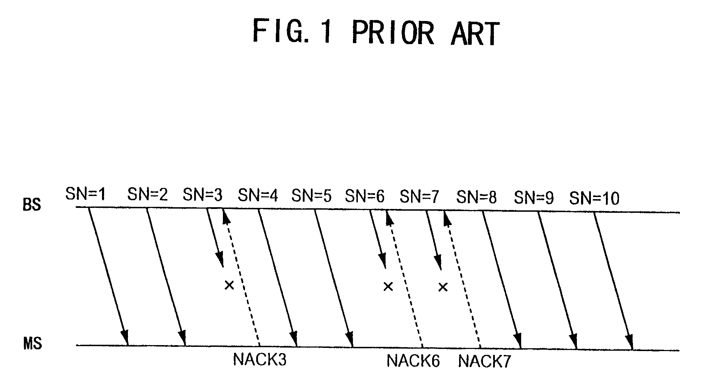

In the normal communication procedure. a retransmission control is performed between a radio base station BS and a mobile station (radio terminal) MS, as shown in Fig. 1. The base station BS serially sends packets with a sequence number SN (Sequence Number) added thereto to the mobile station MS. The mobile station MS supervises the sequence number of a packet received. If the mobile station MS detects loss of a received packet, the mobile station MS immediately sends a retransmission request (NACK) to the base station BS together with the sequence number SN of the lost packet.

If the above retransmission control procedure is applied to the multicast service providing system, retransmission control will be performed as follows.

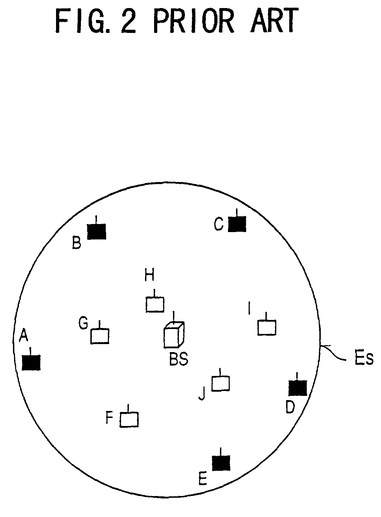

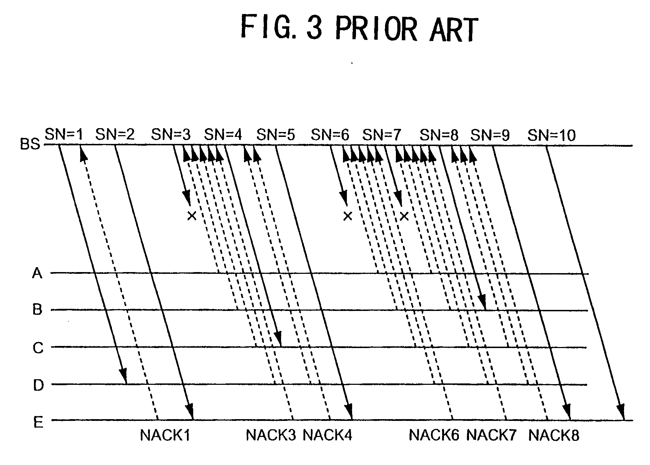

Referring to Fig. 2, it is assumed that mobile stations A through E among mobile stations A through J that exist in a service area Es receive multicast information that a base station BS broadcasts. In this assumption, retransmission control is performed as shown in Fig. 3.

Referring to Fig. 3, the radio station BS serially sends multicast information as a packet with the sequence number SN added. The packet assigned SN=1 is duly received by mobile stations A, B, C and D, while it is not normally received by the base station E. In this case, the mobile station E sends a retransmission request (NACK1) to the base station BS. The packet assigned SN=2 is duly received by all the mobile stations A through E.

The packet of SN=3 is not duly received by the mobile stations A through E at all. Thus, the mobile stations A through E send retransmission requests (NACK3) to the base station BS. If the base station BS receives the retransmission request from only one mobile station, the base station BS will broadcast the packet requested to the service area. However, in practice, each of all the mobile stations A through E sends the respective retransmission request to the base station BS. The same situation as described above occurs for SN=6 and SN=7.

In document US 4,901,313 there is disclosed a communication system comprising a single master station and multiple slave stations. The master station transmits one or more single to multi-point frames to the multiple slave stations. The master station receives response frames from the slave stations, from which it can determine if the number of responses indicating abnormal receiving of the transmitted frame(s) exceeds a predetermined value and if the number of responses indicating normal receiving of the transmitted frame(s) is below a predetermined value. The master station can also detect retransmission requests from the slave stations. The slave stations determine whether the previous frame has been received using a checksum equation, and request retransmission if a frame has been missed.

As described above, the conventional retransmission control allows each mobile station that fails to duly receive a packet to independently send the retransmission request to the base station. This results in increase in traffic load because of many retransmission requests.

### SUMMARY OF THE INVENTION

It is an object of the present invention to provide a retransmission control method applicable to a multicast service providing system in which congestion in a radio section can be reduced.

Another object of the present invention is to provide an information delivery apparatus that performs processing in accordance with the above retransmission control method.

A further object of the present invention is to provide a radio terminal that performs processing in accordance with the above-mentioned retransmission control method.

The above objects of the present invention are achieved by a retransmission control method in a multicast service providing system in which an information delivery apparatus delivers multicast information to radio terminals within a service area of the information delivery apparatus via a radio section, some of the radio terminals being provided to send a request for retransmission of the multicast information in case of an error and others of the radio terminals being provided not to send the same, said method comprising: a) determining whether each of the radio terminals within the service area is a retransmission-permitted terminal permitted for retransmission of the multicast information; b) notifying the permission of the retransmission to the retransmission-permitted terminal, and delivering, when a request for retransmission of the multicast information sent by one of the radio terminals is received, the multicast information to said one of the radio terminals; and c) changing one of the radio terminals determined as being the retransmission-permitted terminal, to a retransmission-inhibited terminal which is not permitted for retransmission of the multicast informationbased on a status of retransmission requests received from the radio terminals.

According to one aspect of the present invention, only one or more radio terminals are permitted to send a request for retransmission of multicast information. Thus, congestion that may occur in the radio section can be reduced.

According to one aspect, only one or more radio terminals are permitted to send a request for retransmission of multicast information, and other radio terminals are not permitted to send a request for retransmission of multicast information. Therefore, it is preferable one or more radio terminals that are placed in retransmission control has a high correlation with the radio terminals that are not permitted in terms of reception error.

According to another aspect of the present invention, at least one radio terminal to be placed in retransmission control may be determined at the information delivery apparatus or at each radio terminal in which it is determined whether its own terminal is permitted to be placed in retransmission control.

According to yet another aspect of the present invention, the step (a) may determine a plurality of radio terminals to be placed in retransmission control. This contributes to improving the quality of received multicast information at much more radio terminals.

In the above case, it is preferable that the plurality of radio terminals has as low correlation with each other as possible in order to ensure the quality of reception at other radio terminals within the service area.

The retransmission control method may be configured so that the step (a) comprises a step of grouping radio terminals in the service area on the basis of unique information assigned to the radio terminals; and the step (a) determines at least one radio terminal on the basis of grouping radio terminals.

The retransmission control method may be configured so that the step (a) determines at least one radio terminal on the basis of a quality of communications between the information delivery apparatus and each of the radio terminals.

The retransmission control method may be configured so that the step (a) determines at least one radio terminal on the basis of distances between the information delivery apparatus and the radio terminals.

The retransmission control method may be configured so that the step (a) determines at least one radio terminal on the basis of directions of the radio terminals from the information delivery apparatus.

The retransmission control method may be configured so that the step (a) determines at least one radio terminal on the basis of moving speeds of the radio terminals.

The status of retransmission requests may indicate how retransmission requests have been issued by radio terminals that are placed in retransmission control, and may include information describing what information is requested to be retransmitted by each radio terminal.

If there are mobile terminals that have similar status of retransmission requests, some of these radio terminals may be replaced by other radio terminals. Such a replacement may be performed when the radio terminal terminates reception of the multicast information.

According to the present invention, there is also provided an information delivery apparatus for use in multicast service providing system in which the information delivery apparatus delivers multicast information to radio terminals within a service area via a radio section, some of the radio terminals being provided to send a request for retransmission of the multicast information in case of an error and others of the radio terminals being provided not to send the same, said information delivery apparatus comprising:
a first unit determining whether each of the radio terminals within the service area is a retransmission-permitted terminal which is permitted for retransmission of the multicast information;
a second unit notifying the permission of the retransmission to the retransmission-permitted terminal, and delivering, when a request for retransmission of the multicast information sent by one of the radio terminals is received, the multicast information to said one of the radio terminals, and
a third unit changing one of the radio terminals determined as being the retransmission-permitted terminal, to a retransmission-inhibited terminal which is not permitted for retransmission of the multicast information, based on a status of retransmission requests received from the radio terminals.

According to the present invention, there is also provided a radio terminal receiving multicast information from an information delivery apparatus via a radio section, said radio terminal comprising:
a first unit determining whether the radio terminal is notified from the information delivery apparatus at being a retransmission-permitted terminal which is permitted for retransmission of the multicast information; and
a second unit sending a request for retransmission of the multicast information to the information delivery apparatus in case of an error when it is determined that the radio terminal is notified as being the retransmission-permitted terminal.

### BRIEF DESCRIPTION OF THE DRAWINGS

Other objects, features and advantages of the present invention will become more apparent from the following detailed description when read in conjunction with the accompanying drawings, in which:
Fig. 1 is a sequence diagram of a transmission procedure of a retransmission request for information (packet) between a base station and a mobile station in a general communication sequence;
Fig. 2 is a diagram of mobile terminals that receive multicast information delivery service within a service area of a base station;
Fig. 3 is a sequence diagram of a transmission procedure of a retransmission request for multicast information in accordance with a conventional retransmission control method;
Fig. 4 is a block diagram of a multicast service providing system to which a retransmission control method according to an embodiment of the present invention is applied;
Fig. 5 is a block diagram of a configuration of a base station used in the system shown in Fig. 4;
Fig. 6 is a sequence diagram of a multicast information transmission procedure and a retransmission request sending procedure which procedures are performed between the base station and each mobile station:
Fig. 7 is a diagram illustrating a first way of determining mobile stations to be placed in retransmission control;
Fig. 8 is a diagram illustrating a second way of determining mobile stations to be placed in retransmission control;
Fig. 9 is a diagram illustrating a third way of determining mobile stations to be placed in retransmission control;
Fig. 10 is a diagram illustrating a fourth way of determining mobile stations to be placed in retransmission control;
Fig. 11 is a diagram illustrating a fifth way of determining mobile stations to be placed in retransmission control;
Fig. 12 is a diagram of change of mobile stations to be placed in retransmission control;
Fig. 13 is a diagram of a management table used for managing status of retransmission requests sent from mobile stations;
Fig. 14 is a diagram of change of mobile stations to be placed in retransmission control; and
Fig. 15 is a block diagram of a configuration of mobile station.

### DESCRIPTION OF THE PREFERRED EMBODIMENTS

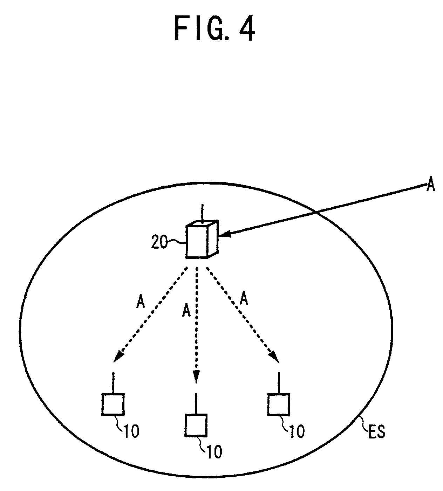

Fig. 4 illustrates a multicast service providing system that employs a retransmission control method according to an embodiment of the present invention.

Referring to Fig. 4, a radio base station 20, which acts as an information delivery apparatus, broadcasts information A supplied over an IP network or the like to a service area Es. Mobile stations MS, that are ratio terminals, are located in the service area ES, and can receive multicast information A from the base station 20.

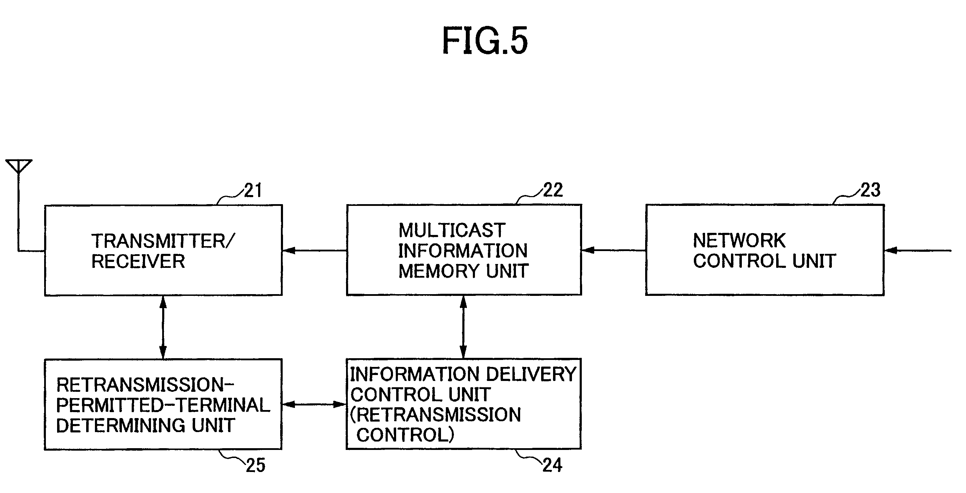

The base station 20 is configured as shown in Fig. 5. The radio station 20 includes a transmitter/receiver 21, a multicast information memory unit 22, a network control unit 23, an information delivery control unit 24, and a retransmission-permitted-terminal determining unit 25, which acts as a first unit of the information delivery apparatus. The multicast information memory unit 22 stores multicast information that is received by the network control unit 23 over a network and is to be delivered.

The information delivery control unit 24, which acts as a second unit of the information delivery apparatus, performs a control which broadcasts the multicast information stored in the multicast information memory unit 22 to the service area Es through the transmitter/receiver 21. The information delivery control unit 24 performs a control to retransmit multicast information upon request for retransmission from the mobile stations 10. The retransmission-permitted-terminal determining unit 25 determines, from among the mobile stations 10 located in the service area Es, mobile stations to which multicast information can be retransmitted. The above control to retransmission is executed in accordance with a method that will be described later. When a retransmission request is received by a mobile station that is one of the mobile stations determined by the retransmission-permitted-terminal determining unit 25, the information delivery control unit 24 performs a control to retransmit multicast information.

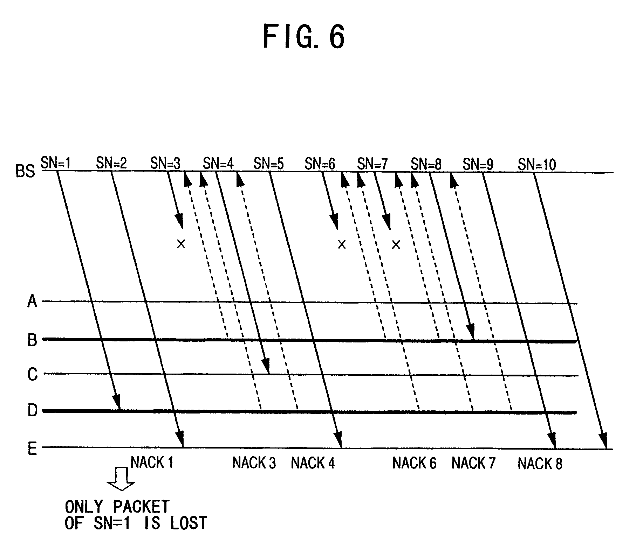

A retransmission control as shown in Fig. 6 is performed in the above-mentioned multicast service delivery system. Fig. 6 assumes that given multicast information is delivered to mobile stations A, B, C, D and E from base station BS, as in the case of Fig. 3.

First, the base station BS communicates with all the mobile stations located within its own service area Es. The transmission-permitted-terminal determining unit 25 determines mobile terminals to which multicast information. can be retransmitted in accordance with a given standard. Then, the base station BS notifies the retransmission-permitted mobile stations of permission of retransmission. It is now assumed that only mobile stations B and D among mobile stations A through E are determined as terminals to which multicast information can be transmitted.

After determining the retransmission-permitted mobile stations, the base station BS broadcast packets of multicast information stored in the multicast information memory unit 22 to the service area Es under the control of the information delivery control unit 24. Then, the retransmission control is performed in accordance with the sequence shown in Fig. 6.

Packet of SN=1 is duly received by the mobile stations A, B, C and D, while not duly received by the mobile station E. In this case, the mobile station E is placed out of the retransmission control. Thus, the mobile station E does not send a retransmission request to the base station BS. The mobile stations B and D, which are placed in the retransmission control, duly receive the packet of SN=1, and do not send the retransmission requests. Hence, the packet of SN=1 is lost in the mobile station E.

Packet of SN=2 is duly received by all the mobile stations A, B, C, D and E, and packet of SN=3 are not duly received by the mobile stations A through E at all. In this case, only the mobile stations B and D that are placed in the retransmission control send a retransmission request (NACK3) to the base station BS. Then, the base station BS retransmits the packet of SN=3 of the multicast information stored in the multicast information memory unit 22 under the control of the information delivery control unit 24. This makes it possible for the mobile stations B and D that have issued the retransmission requests to receive the outstanding packet of SN=3 and for the remaining mobile stations A, C and E that have not issued retransmission requests to receive the packet of SN=3. Thus, all the mobile stations A through E can duly receive the packet of SN=3.

Packet of SN=4 is duly received by the mobile stations A, B and C, whereas not duly received by the mobile stations D and E. In this case, only the mobile station D that is placed in the retransmission control sends a retransmission request (NACK4) to the base station BS. Upon receiving the above request, the base station BS retransmits the packet of SN=4. Thus, not only the mobile station D that has issued the retransmission request but also the mobile station E that has not requested retransmission are now capable of receiving the packet of SN=4.

Packets of SN=6 and SN=7 are not duly received by all the mobile stations A through E, as in the case of SN=3. However, the packets of SN=6 and SN=7 are retransmitted upon requests for retransmission from the mobile stations B and D. Packet of SN=8 is duly received by the mobile stations A and B, but is not received by the mobile stations C, D and E. In this case, the mobile station D that is the subject for the retransmission control sends a request for retransmission (NACK8) to the base station BS. Then, the mobile station E that has not requested retransmission as well as the mobile station D that has requested retransmission can receive the packet of SN=8 that is retransmitted by the base station BS upon request from the mobile station D.

According to the above-mentioned retransmission control, even if the mobile station A has failed to receive packets of SN=3, SN=6, and SN=7 and has not requested retransmission at all, the mobile station A will be able to receive all the missing packets. Similarly, even if the mobile station C has failed to receive packets of SN=3, SN=6, SN=7 and SN=8 and has not requested retransmission at all, the mobile station C will be able to receive all the missing packets. Similarly, even if the mobile station E has failed to receive packets of SN=1, SN=3, SN=6, SN=7 and SN=8 and has not requested retransmission, the mobile station E will be able to receive all the missing packets.

According to the present embodiments, some mobile stations (in other words, a limited number of mobile stations) are predetermined to be placed in the retransmission control. If any one of the predetermined mobile stations fail to duly receive a packet, the retransmission control is sent to the base station. Hence, the base station BS receives a reduced number of requests for retransmission. A mobile station which has a high correlation with the mobile stations placed in the retransmission control will probably receive packets without retransmission requests. This would result in slight degradation of the quality of received multicast information at mobile stations.

The base station BS receives a plurality of retransmission requests for the same single packet. In this case, the base station BS may retransmit multicast information in response to the retransmission request that is received first, and may neglect subsequent requests for retransmission. In other words, the base station BS considers a plurality of mobile stations as a single subject for control. The retransmission request may be sent a plurality of number of times in order to ensure more reliable service. In this case, a control message for retransmission request may include information that indicates how many times the retransmission request has repetitively been sent (the number of times of retransmission). In this case, a control message that has the same SN and the same number of times of retransmission is neglected, so that the retransmission control of the base station can be more simplified.

In the retransmission control having the above-mentioned procedure, it is very important to determine which mobile stations should be placed in the retransmission control because this will greatly affect the quality of received multicast information in each mobile station. Generally, the higher the correlation between reception error at mobile stations which are placed in the retransmission control and reception error at mobile stations which are placed out of the retransmission control, the greater the effects of the above retransmission control. Further, the lower the correlation of reception error among mobile stations that are placed in the retransmission control, the greater the effects of the retransmission control. With the above in mind, the retransmission-permitted terminal determining unit 25 of the base station BS determines mobile stations that are placed in retransmission control in the following manner.

The first way of determining mobile stations to be placed in retransmission control is to group mobile stations.

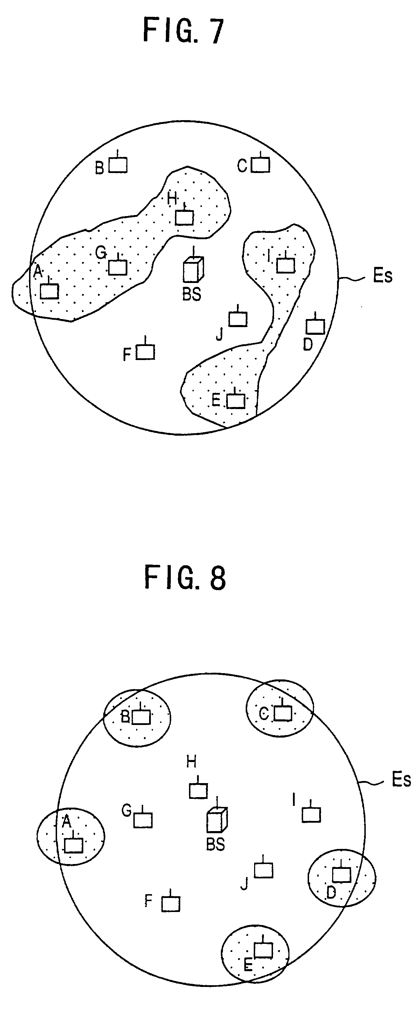

Generally, each of the mobile stations is assigned a unique identifier, which is, for example, a unique telephone number, a unique MAC address and a unique ID. The mobile stations are grouped by using the unique identifiers. For example, the subject for the retransmission control is a mobile station having an identifier that satisfies a condition that, when the present identifier is divided by ten, the remainder is equal to 3. In this case, as shown in Fig. 7, among mobile stations A through J located in the service area Es of the base station BS, mobile stations A, G, H, E and I that are grouped by the above condition based on the identifier are determined to be placed in the retransmission control. This makes it possible to determine mobile stations that are located at random within the service area Es to be placed in the retransmission control.

By using a smaller number (a number smaller than 10) by which the identifier is divided, it is possible to determine a larger number of mobile stations to be placed in the retransmission control. In this manner, the number of mobile stations that should be placed in the retransmission control can be adjusted.

The second way of determining mobile stations to be placed in retransmission control uses the quality of communications with the base station BS.

For example, as shown in Fig. 8, mobile stations A through J located in the service area Es of the base station BS measure received power of a perch channel from the base station BS. Mobile stations A, B, C, D and E that measure received power levels lower than a given threshold level recognize their own stations to be permitted to issue a retransmission request (determined to be placed in the retransmission control).

Alternatively, the base station BS measures received levels of controls signals such as connection requests sent by the mobile stations at the time of making an initial connection. Then, the base station BS determines mobile stations having received levels lower than a given threshold level to be placed in the retransmission control. In this case, the base station BS notifies each of the mobile stations determined to be placed in the retransmission control that it is permitted to send a request for retransmission. Such a notification may be sent as broadcasting information using the perch channel or may be sent by individually sending a related control signal to each of the selected mobile stations.

The use of received levels as a parameter that represents the quality of communications is based on a situation in which mobile stations related to relatively low received levels have a high packet error ratio and more frequently request retransmission than mobile stations related to relatively high received levels. There is a high possibility that a packet which results in reception error at mobile stations that relatively frequently request retransmission may result in reception error at other mobile stations that ensure the quality of communications to some extent. Therefore, the quality of communications can be improved by determining mobile stations that have a high error correlation with other mobile stations to be placed in the retransmission control.

Besides the received level, a packet error ratio or bit error ratio may be used as a parameter that represents the quality of communications.

The third way of determining mobile stations to be placed in retransmission control uses the distance between the base station BS and each mobile station.

The distance between the base station and each mobile station is measured on the basis of the communication status therebetween. Mobile stations that are away from the base station BS over a given distance are determined to be placed in retransmission control. This would result in almost the same effects as those brought by the retransmission control based on the quality of communications.

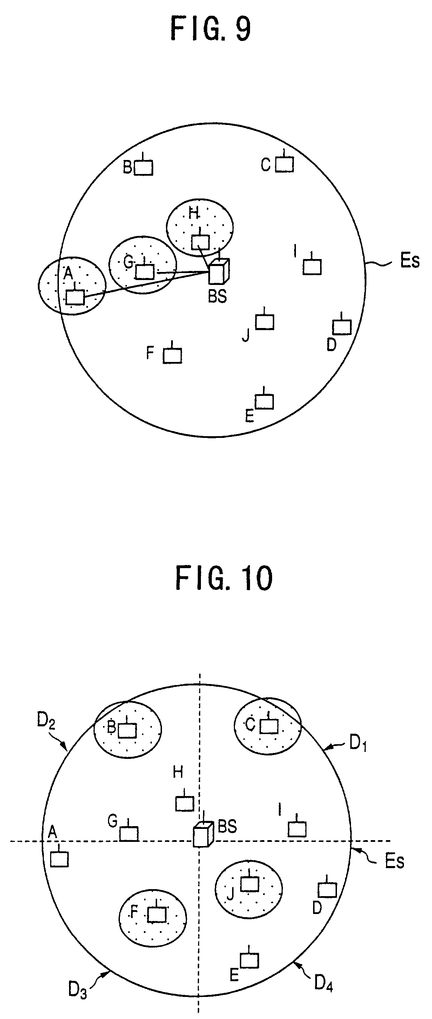

Also, as shown in Fig. 9, a plurality of stepwise threshold levels that depend on distance are set, and mobile stations located in different distance ranges are determined to be placed in the retransmission control. Each of the different distance ranges is defined by one or two of the stepwise threshold levels. For instance, Fig. 9 shows mobile stations H, G and A that are respectively located in different distance ranges. The mobile station H is located within a range of 10 meters from the base station BS. The mobile station G is located within a range of 10 meters to 30 meters. The mobile station A is located within a range over 30 meters.

It is expected that mobile terminals located in the different distance ranges with regard to the base station have a relatively small correlation in terms of packet error. Hence, it is possible to improve the quality of received multicast information at the mobile stations A through H within the service area Es.

The fourth method of determining mobile stations to be placed in retransmission control uses the directions with respect to the base station BS in which mobile stations exist.

For example, as shown in Fig. 10, assuming that the base station BS can detect mobile stations in four angular ranges D1, D2, D3 and D4, the base station BS determines, for each of the angular ranges D1 through D4, one of the mobile stations to be placed in the retransmission control. In the example of Fig. 10, mobile stations C, B, F and J respectively located in the angular ranges D1, D2, D3 and D4 are respectively determined to be placed in the retransmission control. Two or more mobile stations can be selected for the retransmission control in each of the angular ranges D1 - D4.

The base station BS is required to detect the directions of the mobile stations located in the service area Es. When the base station BS is equipped with a sector antenna, the base station BS can detect mobile stations on the sector basis. When the sector antenna has an increased number of sectors, only one mobile station can be selected from a plurality of sectors. When the base station BS is equipped with an adaptive array antenna, the base station BS cannot recognize the physical directions of mobile stations, while the sector antenna can recognize the physical directions. However, it is possible to select, as the retransmission control subjects, mobile stations that have different patterns of weighting factors of an adjuster of the adaptive array antenna in communications. The mobile stations thus selected are located in logically different directions.

There is a high possibility that the mobile stations located in different directions from the base station BS may have different propagation environments and have a low correlation in terms of reception error. Thus, a large number of mobile stations would enjoy the effects of retransmission of multicast information.

The fifth way of determining mobile stations that should receive the retransmission control uses the moving speeds thereof.

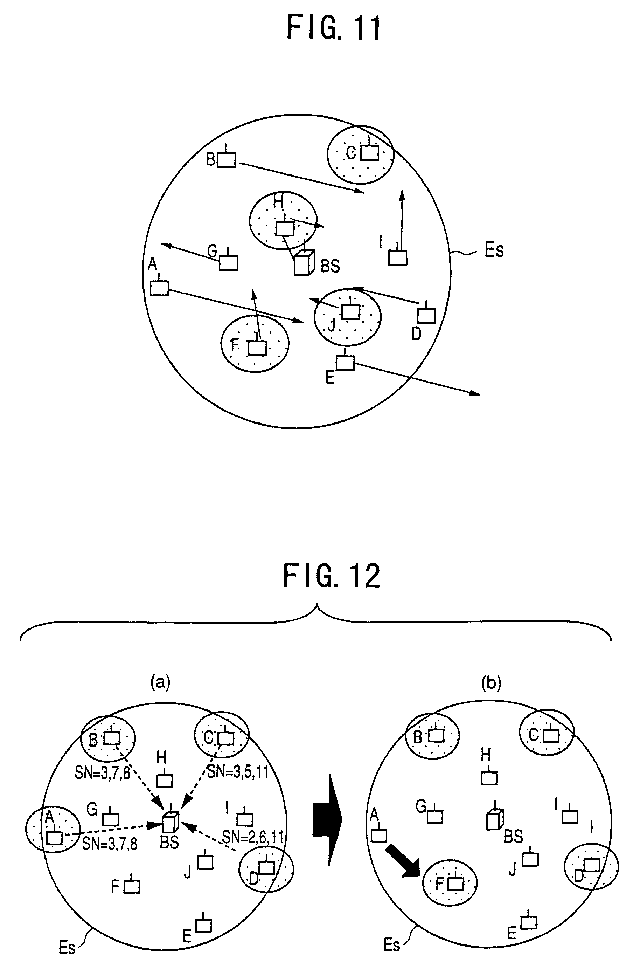

For example, as shown in Fig. 11, the moving speeds of mobile stations A through J in the service area Es are measured on the basis of the communication status between the base station BS and each of the mobile stations A through J. Mobile stations C, F, H and J that have speeds lower than a given threshold level are determined to be placed in the retransmission control.

When a mobile station move at a relatively high speed, the mobile station would stay in the service area Es for a short time. If such a mobile station is determined to be placed in retransmission control, there will be an increased possibility that the mobile station subjected to the retransmission control may be out of the service area Es. In order to avoid such a situation, mobile stations that move at relatively low speeds are selected as the subjects for the retransmission control. Thus, it is no longer necessary to often change the mobile stations for retransmission control, so that the retransmission control can be more simplified.

The mobile stations that are placed in the retransmission control are determined by any of the above-mentioned first through fifth ways. If mobile stations do not enjoy the results of the retransmission control that is executed to the selected mobile stations very well, it is preferable to change the mobile stations to be placed in the retransmission control as follows.

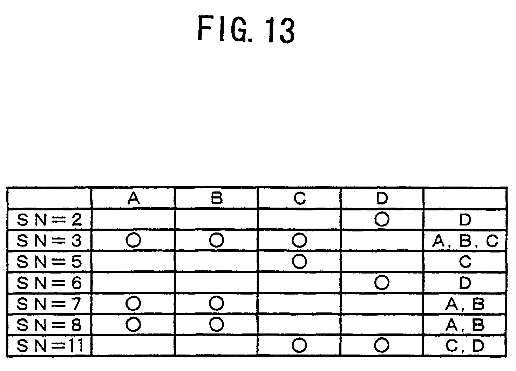

As shown in part (a) of Fig. 12, it is assumed that only mobile stations A through D among mobile stations A through J located in the service area Es of the base station BS are selected as mobile stations to be placed in the retransmission control. In this case, the information delivery control unit 24 of the base station BS acts as a fourth unit, and manages retransmission requests from the mobile stations that are placed in the retransmission control. For example, a management table shown in Fig. 13 is used to manage retransmission requests from the mobile stations A, B, C and D placed in the retransmission control. The management table shows that a request for retransmitting the packet of SN=2 has been received from mobile station D and requests for retransmission of the packet of SN=3 have been received from the mobile stations A, B and C. The management table shows that a request for retransmission of the packet of SN=5 has been received from the mobile station C and requests for retransmitting the packet of SN=7 have been received from the mobile stations A and B.

The retransmission-permitted-terminal determining unit 25 of the base station BS. which also acts as a terminal changing unit (third unit), changes one or more mobile stations on the basis of the status of the retransmission requests from the mobile stations managed by the information delivery control unit 24.

A first situation in which requests for retransmission of an identical packet are made by a plurality of mobile stations can be considered to be the same as a second situation in which only one of these mobile stations makes the request for retransmission because the requested packet is retransmitted in either case. If the first situation often occurs, the radio resources will be used wastefully. The first situation can be avoided by referring to the table in order to detect a situation in which a plurality of mobile stations have request retransmission of the identical packet a predetermined number of times or more. If such a situation is detected, only one of the plurality of mobile stations is left for retransmission control, and the remaining mobile stations are replaced by other mobile stations.

For example, in the example shown in part (a) of Fig. 12 and Fig. 13, the mobile stations A and B request retransmission of the packets of SN=3, SN=7 and SN=8. That is, each of the mobile stations A and B requests retransmission of the identical packets three times. In this case, the mobile station F is placed in the retransmission control instead of the mobile station A, as shown in part (b) of Fig. 12. The mobile station F is selected so that the correlation between reception error that may occur at the mobile station F and reception error that may occur at the mobile station A can be reduced as greatly as possible. Then, the base station BS notifies the mobile station A that it has been placed out of retransmission control, and notifies the mobile station F that it has been placed in transmission control.

Thus, it is possible to efficiently utilize the radio resources and improve the quality of communications at mobile stations within the service area Es.

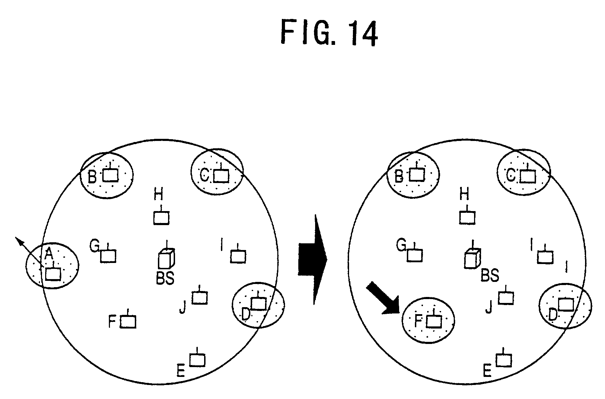

In this case, for example, as shown in Fig. 14, immediately before handover or termination of multicast reception, the mobile station A placed in the retransmission control notifies the base station BS of the above. Upon receiving the above notification, the base station BS changes the mobile station placed in the retransmission control from the mobile station A to the mobile station F. Then, the base station BS notifies the mobile station F that the mobile station F is now placed in retransmission control. It is preferable that the mobile station to be selected in the above-mentioned way has as high correlation with the mobile station to be replaced in terms of reception error as possible.

The above-mentioned examples is mainly designed so that the base station Bs determines mobile stations to be placed in the retransmission control, enables and notifies these mobile stations that they are now placed in the retransmission control. Alternatively, as previously described with regard to the second way of determining mobile stations to be placed in the retransmission control, mobile stations may determine whether their own stations are placed in the retransmission control in accordance with any of the aforementioned procedures.

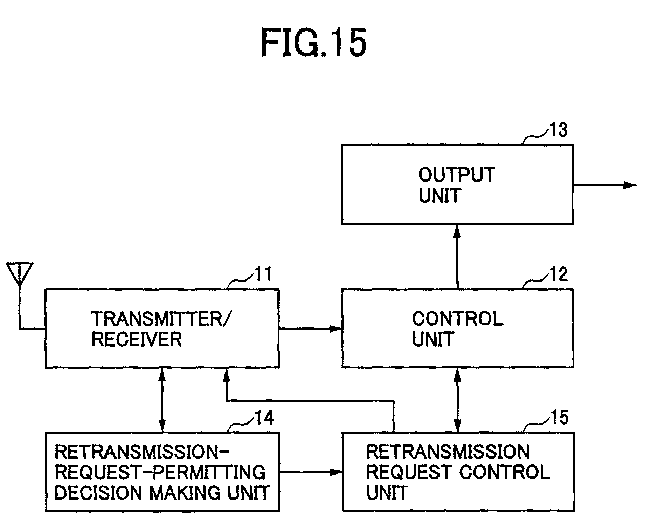

The configuration of the base station 20 shown in Fig. 5 is directed to determining which mobile stations should be placed in the retransmission control on the side of the base station 20. Alternatively, each mobile station may be designed to determine whether its own station is placed in the retransmission control for itself. Such a mobile station may has a configuration as shown in Fig. 15.

Referring to Fig. 15, the mobile station 10, that is a radio terminal, includes a transmitter/receiver 11, a control unit 12, an output unit 13, a retransmission-request-permitting decision making unit 14, and a retransmission request control unit 15. The transmitter/receiver communicates with the base station 20, and receives multicast information delivered by the base station 20. The control unit 12, which acts as a third unit of the radio terminal, controls the transmitter/receiver 11, and checks reception error that may be contained in the received multicast information. The output unit 13 acquires information received by the transmitter/receiver 11 via the control unit 12, and can output the acquired information to an output device such as a display unit. The received information from the output unit 12 may be output to a personal computer or the like.

The retransmission-request-permitting decision making unit 14, which acts as a first unit of the radio terminal, determines whether its own station is permitted to be placed in the retransmission control on the basis of the quality of the signal (received level, error ratio, the amount of interference or the like) sent by the base station 20 and received by the transmitter/receiver 11. This determination may be performed by the aforementioned second way. The decision making unit 14 may determine whether its own station is permitted to be placed in the retransmission control on the basis of a notification indicating that the mobile station has just been determined to be placed in the retransmission control.

The retransmission request control unit 15, which acts as a second part of the radio terminal, is enabled only when it is determined, by the decision making unit 14, that its own station has been placed in the retransmission control. Then, as has been described with reference to Fig. 6, the retransmission request control unit 15 instructs the transmitter/receiver 11 to send a retransmission request signal (NACK) to the base station 20 if loss of packet happens.

If the retransmission request is sent to the base station 20 by the transmitter/receiver 11, the requested packet will be retransmitted. The retransmitted packet is then received by the transmitter/receiver 11 and is used to correct the received multicast information. Then, the corrected multicast information is supplied to the output unit 13. If the retransmission-request-permitting decision making unit 14 determines that its own station is not permitted to be placed in the retransmission control, the retransmission request control unit 15 is disabled. In this case, if error of received packet, namely, loss of packet is detected, the controller 12 retains the packet serial number SN of the questioned packet. When the packet having the same serial number SN as 'that of the erroneous packet is retransmitted in response to a retransmission request made by another mobile station and is then received by the present mobile station, the multicast information is corrected by using the retransmitted packet and is then supplied to the output unit 13.

According to the present invention, only mobile stations that are permitted to be placed in retransmission control are involved in retransmission of multicast information. Thus, congestion in the radio section can be reduced.

The present invention is not limited to the specifically disclosed embodiments, and variations and modifications may be made without departing from the scope of the present invention.

## Claims

1. A retransmission control method for a multicast service providing system in which an information delivery apparatus (20) delivers multicast information to radio terminals (10) within a service area (ES) of the information delivery apparatus via a radio section (21), some of the radio terminals (10) being provided to send a request for retransmission of the multicast information in case of an error and others of the radio terminals being provided not to send the same retransmission request, said method **characterised by** comprising:
a) determining whether each of the radio terminals (10) within the service area (ES) is a retransmission-permitted terminal (10) permitted for retransmission of the multicast information;
b) notifying the permission of the retransmission to the retransmission-permitted terminal (10), and delivering, when a request for retransmission of the multicast information sent by one of the radio terminals (10) is received, the multicast information to said one of the radio terminals (10); and
c) changing one of the radio terminals (10) determined as being the retransmission-permitted terminal (10), to a retransmission-inhibited terminal (10) which is not permitted for retransmission of the multicast information, based on a status of retransmission requests received from the radio terminals (10).

2. The retransmission control method as claimed in claim 1, wherein:
the step (a) comprises a step of determining, at the information delivery apparatus, said at least one radio terminal; and
the retransmission control method further comprises a step of notifying said at least one radio terminal that a request for retransmission is permitted.

3. The retransmission control method as claimed in claim 1, wherein the step (a) comprises a step of determining, at each radio terminal (10), whether its own terminal (10) is permitted to be placed in retransmission control.

4. The retransmission control method as claimed in claim 1, wherein the step (a) determines a plurality of radio terminals (10) to be placed in retransmission control.

5. The retransmission control method as claimed in claim 1, wherein:
the step (a) comprises a step of grouping radio terminals (10) in the service area on the basis of unique information assigned to the radio terminals (10); and
the step (a) determines at least one radio terminal (10) on the basis of grouping radio terminals.

6. The retransmission control method as claimed in claim 1, wherein the step (a) determines at least on radio terminal (10) on the basis of a quality of communications between the information delivery apparatus (20) and each of the radio terminals (10).

7. The retransmission control method as claimed in claim 1, wherein the step (a) determines at least one radio terminal (10) on the basis of distances between the information delivery apparatus (20) and the radio terminals (10).

8. The retransmission control method as claimed in claim 1, wherein the step (a) determines at least one radio terminal (10) on the basis of directions of the radio terminals (10) from the information delivery apparatus (20).

9. The retransmission control method as claimed in claim 1, wherein the step (a) determines at least one radio terminal (10) on the basis of moving speeds of the radio terminals (10).

10. The retransmission control method as claimed in claim 1. further comprising a step of changing said at least one radio terminal (10) to another radio terminal (10) when said at least one radio terminal (10) terminates reception of the multicast information.

11. An information delivery apparatus (20) for use in a multicast service providing system in which the information delivery apparatus (20) delivers multicast information to radio terminals (10) within a service area via a radio section (21), some of the radio terminals (10) being provided to send a request for retransmission of the multicast information in case of an error, others of the radio terminals (10) being provided not to send the same retransmission request, said information delivery apparatus (20) **characterised in** comprising:
a first unit (25) determining whether each of the radio terminals (10) within the service area (ES) is a retransmission-permitted terminal (10) which is permitted for retransmission of the multicast information;
a second unit (24) notifying the permission of the retransmission to the retransmission-permitted terminal (10), and delivering, when a request for retransmission of the multicast information to said one of the radio terminals (10) is received, the multicast information to sent by one of the radio terminals (10), and
a third unit (24) changing one of the radio terminals (10) determined as being the retransmission-permitted terminal (10), to a retransmission-inhibited terminal (10) which is not permitted for retransmission of the multicast information, based on a status of retransmission requests received from the radio terminals (10).

12. The information delivery apparatus as claimed in claim 11, wherein the first unit determines a plurality of radio terminals (10) to be placed in retransmission control.

13. The information delivery apparatus (20) as claimed in claim 11, further comprising a fourth unit (24) managing status of retransmission requests sent by radio terminals (10) placed in the retransmission control,
the third unit changing said at least one radio terminals (10) on the basis of the status of retransmission requests managed by the fourth unit (24).

14. A radio terminal (10) receiving multicast information from an information delivery apparatus (20) via a radio section (11), said radio terminal (10) **characterised in** comprising:
a first unit (14) determining whether the radio terminal is notified from the information delivery apparatus (20) as being retransmission-permitted terminal (10) which is permitted for retransmission of the multicast information; and
a second unit (15) sending a request for retransmission of the multicast information to the information delivery apparatus (20) in case of an error when it is determined that the radio terminal (10) is notified as being the retransmission-permitted terminal (10).

15. The radio terminal (10) as claimed in claim 14, wherein the first unit determines whether its own terminal (10) is placed in retransmission control on the basis of given information sent by the information delivery appatatus (20).

16. The radio terminal (10) as claimed in claim 14, wherein the first unit (14) determines whether its own terminal is placed in retransmission control on the basis of a quality of communications with the information delivery apparatus (20).

17. The radio terminal (10) as claimed in claim 14, further comprising a third unit which corrects the multicast information by part of the multicast information sent by the information delivery apparatus (20) retransmitted in response to a request for retransmission by the second unit (15) when the first unit (14) determines that its own terminal (10) is placed in retransmission control and which corrects the multicast information by part for the multicast information sent by the information delivery apparatus (20) transmitted in response to a request for retransmission by another radio terminal (10) when the first unit (14) determines that its own terminal (10) is placed out of retransmission control.

## Patentansprüche

1. Übertragungswiederholungssteuerverfahren für ein Multicastservice-Bereitstellungssystem, in dem eine Informationsliefervorrichtung (20) Multicastinformationen an Funkstationen (10) in einem Servicebereich (ES) der Informationsliefervorrichtung über einen Funkabschnitt (21) liefert, wobei einige der Funkstationen (10) vorgesehen sind, um im Fall eines Fehlers eine Anforderung zur Übertragungswiederholung der Multicastinformationen zu senden, und andere der Funkstationen vorgesehen sind, diese Übertragungswiederholungsanfrage nicht zu senden, wobei das Verfahren **gekennzeichnet ist durch**:
a) Bestimmen, ob jede der Funkstationen (10) in dem Servicebereich (ES) eine zur Übertragungswiederholung berechtigte Station (10) ist, die zur Übertragungswiederholung der Multicastinformationen berechtigt ist;
b) Melden der Berechtigung zur Übertragungswiederholung an die zur Übertragungswiederholung berechtigte Station (10) und, wenn **durch** eine der Funkstationen (10) eine Anforderung zur Übertragungswiederholung der gesendeten Multicastinformationen empfangen wird, Liefern der Multicastinformationen zu der einen der Funkstationen (10); und
c) Ändern einer der Funkstationen (10), die als zur Übertragungswiederholung berechtigte Station (10) bestimmt ist, in eine für die Übertragungswiederholung gesperrte Station (10), die nicht zur Übertragungswiederholung der Multicastinformationen berechtigt ist, basierend auf einem Status von von den Funkstationen (10) empfangenen Übertragungswiederhotungsanforderungen.

2. Übertragungswiederholungssteuerverfahren nach Anspruch 1, bei welchem der Schritt (a) einen Schritt des Bestimmens der wenigstens einen Funkstation an der informationsliefervorrichtung aufweist; und
das Übertragungswiederholungssteuerverfahren ferner einen Schritt des Meldens an die wenigstens eine Funkstation, dass eine Anforderung zur Übertragungswiederholung erlaubt ist, aufweist.

3. Übertragungswiederholungssteuerverfahren nach Anspruch 1, bei welchem der Schritt (a) einen Schritt des Bestimmens an jeder Funkstation (10), ob die eigene Station (10) in eine Übertragungswiederholungssteuerung gesetzt werden darf, aufweist.

4. Übertragungswiederholungssteuerverfahren nach Anspruch 1, bei welchem der Schritt (a) mehrere in eine Übertragungswiederholungssteuerung zu setzende Funkstationen (10) bestimmt.

5. Übertragungswiederholungssteuerverfahren nach Anspruch 1, bei welchem der Schritt (a) einen Schritt des Gruppierens von Funkstationen (10) in dem Servicebereich auf der Basis von den Funkstationen (10) zugeordneten eindeutigen Informationen aufweist; und
der Schritt (a) wenigstens eine Funkstation (10) auf der Basis des Gruppierens von Funkstationen bestimmt.

6. Übertragungswiederholungssteuerverfahren nach Anspruch 1, bei welchem der Schritt (a) wenigstens eine Funkstation (10) auf der Basis einer Qualität von Kommunikationen zwischen der Informationsliefervorrichtung (20) und jeder der Funkstationen (10) bestimmt.

7. Übertragungswiederholungssteuerverfahren nach Anspruch 1, bei welchem der Schritt (a) wenigstens eine Funkstation (10) auf der Basis von Abständen zwischen der Informationsliefervorrichtung (20) und den Funkstationen (10) bestimmt.

8. Übertragungswiederholungssteuerverfahren nach Anspruch 1, bei welchem der Schritt (a) wenigstens eine Funkstation (10) auf der Basis von Richtungen der Funkstationen (10) von der Informationsliefervorrichtung (20) bestimmt.

9. Übertragungswiederholungssteuerverfahren nach Anspruch 1, bei welchem der Schritt (a) wenigstens eine Funkstation (10) auf der Basis von Bewegungsgeschwindigkeiten der Funkstationen (10) bestimmt.

10. Übertragungswiederholungssteuerverfahren nach Anspruch 1, ferner mit einem Schritt des Wechselns von der wenigstens einen Funkstation (10) zu einer anderen Funkstation (10), wenn die wenigstens eine Funkstation (10) einen Empfang der Multicastinformationen beendet.

11. Informationsliefervorrichtung (20) zur Verwendung in einem Multicastservice-Bereitstellungssystem, in dem die Informationsliefervorrichtung (20) Multicastinformationen an Funkstationen (10) in einem Servicebereich über einen Funkabschnitt (21) liefert, wobei einige der Funkstationen (10) vorgesehen sind, um im Fall eines Fehlers eine Anforderung zur Übertragungswiederholung der Multicastinformationen zu senden, andere der Funkstationen (10) vorgesehen sind, um diese Übertragungswiederholungsanforderung nicht zu senden, und die Informationsliefervorrichtung (20) **gekennzeichnet ist durch**:
eine erste Einheit (25), die bestimmt, ob jede der Funkstationen (10) in dem Servicebereich (ES) eine zur Übertragungswiederholung berechtigte Station (10) ist, die zur Übertragungswiederholung der Multicastinformationen berechtigt ist; eine zweite Einheit (24), die die Berechtigung der Übertragungswiederholung an die zur Übertragungswiederholung berechtigte Station (10) meldet und, wenn eine Anforderung zur Übertragungswiederholung der Multicastinformationen **durch** eine der Funkstationen (10) empfangen wird, die Multicastinformationen an die eine der Funkstationen (10) liefert; und
eine dritte Einheit (24), die eine der Funkstationen (10), die als zur Übertragungswiederholung berechtigte Station (10) bestimmt ist, in eine für eine Übertragungswiederholung gesperrte Station (10), welche nicht zur Übertragungswiederholung der Multicastinformationen berechtigt ist, basierend auf einem Status der von den Funkstationen (10) empfangenen Übertragungswiederholungsanforderungen ändert.

12. Informationsliefervorrichtung nach Anspruch 11, bei welcher die erste Einheit mehrere in eine Übertragungswiederholungssteuerung zu setzende Funkstationen (10) bestimmt.

13. Informationsliefervorrichtung (20) nach Anspruch 11, ferner mit einer vierten Einheit (24), die den Status von durch in die Übertragungswiederholungssteuerung gesetzten Funkstationen (10) gesendeten Übertragungswiederholungsanforderungen verwaltet, wobei die dritte Einheit die wenigstens eine Funkstation (10) auf der Basis des durch die vierte Einheit (24) verwalteten Status der Übertragungswiederholungsanforderungen ändert.

14. Funkstation (10), die Multicastinformationen von einer Informationsliefervorrichtung (20) über einen Funkabschnitt (11) empfängt, wobei die Funkstation (10) **gekennzeichnet ist durch**:
eine erste Einheit (14), die bestimmt, ob der Funkstation von der Informationsliefervorrichtung (20) gemeldet ist, dass sie eine zur Übertragungswiederholung berechtigte Station (10), welche zur Übertragungswiederholung der Multicastinformationen berechtigt ist, ist; und
eine zweite Einheit (15), die eine Anforderung zur Übertragungswiederholung der Multicastinformationen an die Informationsliefervorrichtung (20) im Fall eines Fehlers sendet, wenn bestimmt ist, dass der Funkstation (10) gemeldet ist, dass sie eine zur Übertragungswiederholung berechtigte Station (10) ist.

15. Funkstation (10) nach Anspruch 14, bei welcher die erste Einheit auf der Basis von gegebenen Informationen, die durch die Informationsliefervorrichtung (20) geschickt werden, bestimmt, ob diese Station (10) in eine Übertragungswiederholungssteuerung gesetzt wird.

16. Funkstation (10) nach Anspruch 14, bei welcher die erste Einheit (14) auf der Basis einer Qualität von Kommunikationen mit der Informationsliefervorrichtung (20) bestimmt, ob diese Station in eine Übertragungswiederholungssteuerung gesetzt wird.

17. Funkstation (10) nach Anspruch 14, ferner mit einer dritten Einheit, die die Multicastinformationen durch einen Teil der durch die Informationsliefervorrichtung (20) als Reaktion auf eine Anforderung zur Übertragungswiederholung durch die zweite Einheit (15) erneut übertragenen Multicastinformationen korrigiert, wenn die erste Einheit (14) bestimmt, dass diese Station (10) in eine Übertragungswiederholungssteuerung gesetzt ist, und welche die Multicastinformationen durch einen Teil der durch die Informationsliefervorrichtung (20) als Reaktion auf eine Anforderung zur Übertragungswiederholung durch eine andere Funkstation (10) übertragenen Multicastinformationen korrigiert, wenn die erste Einheit (14) bestimmt, dass diese Station (10) aus einer Übertragungswiederholungssteuerung gestrichen ist.

## Revendications

1. Procédé de commande de retransmission pour un système de fourniture de services multi-diffusion dans lequel un appareil de délivrance d'information (20) délivre une information de multi-diffusion sur des terminaux radio (10) à l'intérieur d'une zone de desserte (ES) de l'appareil de délivrance d'information via une section radio (21), certains des terminaux radio (10) étant prévus pour envoyer une requête de retransmission d'une information multi-diffusion dans le cas d'une erreur et d'autres terminaux radios étant prévus pour ne pas envoyer la même requête de retransmission, ledit procédé étant **caractérisé en ce qu'**il comprend:
a) la détermination de si oui ou non chacun des terminaux radio (10) dans la zone de desserte (ES) est un terminal à retransmission autorisée (10) qui est autorisé à retransmettre l'information multi-diffusion;
b) la notification de l'autorisation de la retransmission au terminal à retransmission autorisée (10) et la délivrance, lorsqu'une requête de retransmission de l'information multi-diffusion envoyée par l'un des terminaux radio (10) est reçue, de l'information multi-diffusion sur ledit un des terminaux radio (10); et
c) l'échange de l'un des terminaux radio (10) qui est déterminé comme étant le terminal à retransmission autorisée (10) contre un terminal à retransmission inhibée (10) qui n'est pas autorisé à retransmettre l'information multi-diffusion, sur la base d'un état de requêtes de retransmission qui sont reçues depuis les terminaisons radio (10).

2. Procédé de commande de retransmission selon la revendication 1, dans lequel:
l'étape (a) comprend une étape de détermination, au niveau de l'appareil de délivrance de l'information, dudit au moins un terminal radio; et
le procédé de commande de retransmission comprend en outre l'étape de notification audit au moins un terminal radio du fait qu'une requête de retransmission est autorisée.

3. Procédé de commande de retransmission selon la revendication 1, dans lequel l'étape (a) comprend une étape de détermination, au niveau de chaque terminal radio (10), de si oui ou non son propre terminal (10) est autorisé à être placé sous commande de retransmission.

4. Procédé de commande de retransmission selon la revendication 1, dans lequel l'étape (a) détermine une pluralité de terminaux radio (10) à placer sous commande de retransmission.

5. Procédé de commande de retransmission selon la revendication 1, dans lequel:
l'étape (a) comprend une étape de groupage de terminaux radio (10) dans la zone de desserte sur la base d'une information unique qui est assignée aux terminaux radio (10); et
l'étape (a) détermine au moins un terminal radio (10) sur la base du groupage de terminaux radio.

6. Procédé de commande de retransmission selon la revendication 1, dans lequel l'étape (a) détermine au moins un terminal radio (10) sur la base d'une qualité de communication entre l'appareil de délivrance d'information (20) et chacun des terminaux radio (10).

7. Procédé de commande de retransmission selon la revendication 1, dans lequel l'étape (a) détermine au moins un terminal radio (10) sur la base de distances entre l'appareil de délivrance d'information (20) et les terminaux radio (10).

8. Procédé de commande de retransmission selon la revendication 1, dans lequel l'étape (a) détermine au moins un terminal radio (10) sur la base de directions des terminaux radio (10) par rapport à l'appareil de délivrance d'information (20).

9. Procédé de commande de retransmission selon la revendication 1, dans lequel l'étape (a) détermine au moins un terminal radio (10) sur la base de vitesses de déplacement des terminaux radio (10).

10. Procédé de commande de retransmission selon la revendication 1, comprenant en outre une étape d'échange d'au moins un terminal radio (10) contre un autre terminal radio (10) lorsque ledit au moins un terminal radio (10) termine une réception de l'information multi-diffusion.

11. Appareil de délivrance d'information (20) pour une utilisation dans un système de fourniture de services multi-diffusion où l'appareil de délivrance d'information (20) délivre une information multi-diffusion sur des terminaux radio (10) dans une zone de desserte via une section radio (21), certains des terminaux radio (10) étant prévus pour envoyer une requête de retransmission de l'information multi-diffusion dans le cas d'une erreur, d'autres terminaux radio (10) étant prévus pour ne pas envoyer la même requête de retransmission, ledit appareil de délivrance d'information (20) étant **caractérisé en ce qu'**il comprend:
une première unité (25) qui détermine si oui ou non chacun des terminaux radio (10) dans la zone de desserte (ES) est un terminal à retransmission autorisée (10) qui est autorisé à retransmettre l'information multi-diffusion;
une seconde unité (24) qui notifie l'autorisation de retransmission au terminal à retransmission autorisée (10) et qui délivre, lorsqu'une requête de retransmission d'information multi-diffusion sur ledit un des terminaux radio (10) est reçue, l'information multi-diffusion à envoyer au moyen de l'un des terminaux radio (10); et
une troisième unité (24) qui échange l'un des terminaux radio (10) qui est déterminé comme étant le terminal à retransmission autorisée (10) contre un terminal à retransmission inhibée (10) qui n'est pas autorisé à retransmettre l'information multi-diffusion, sur la base d'un état de requêtes de retransmission qui sont reçues depuis les terminaux radio (10).

12. Appareil de délivrance d'information (20) selon la revendication 11, dans lequel la première unité détermine une pluralité de terminaux radio (10) à placer sous commande de retransmission.

13. Appareil de délivrance d'information (20) selon la revendication 11, comprenant en outre une quatrième unité (24) qui gère un état de requêtes de retransmission qui sont envoyées par des terminaux radio (10) qui sont placés sous commande de retransmission,
la troisième unité échangeant ledit au moins un terminal radio (10) sur la base de l'état de requêtes de retransmission qui sont gérées par la quatrième unité (24).

14. Terminal radio (10) qui reçoit une information multi-diffusion en provenance d'un appareil de délivrance d'information (20) via une section radio (11), ledit terminal radio (10) étant **caractérisé en ce qu'**il comprend:
une première unité (14) qui détermine si oui ou non le terminal radio reçoit notification depuis l'appareil de délivrance d'information (20) du fait qu'il est un terminal à retransmission autorisée (10) qui est autorisé à retransmettre l'information multi-diffusion; et
une seconde unité (15) qui envoie une requête de retransmission de l'information multi-diffusion sur l'appareil de délivrance d'information (20) dans le cas d'une erreur, lorsqu'il est déterminé que le terminal radio (10) reçoit notification du fait qu'il est le terminal à retransmission autorisée (10).

15. Terminal radio (10) selon la revendication 14, dans lequel la première unité détermine si oui ou non son terminal propre (10) est placé sous commande de retransmission sur la base d'une information donnée qui est envoyée par l'appareil de délivrance d'information (20).

16. Terminal radio (10) selon la revendication 14, dans lequel la première unité (14) détermine si oui ou non son terminal propre est placé sous commande de retransmission sur la base d'une qualité de communications avec l'appareil de délivrance d'information (20).

17. Terminal radio (10) selon la revendication 14, comprenant en outre une troisième unité qui corrige l'information multi-diffusion au moyen d'une partie de l'information multi-diffusion qui est envoyée par l'appareil de délivrance d'information (20) et qui est retransmise en réponse à une requête de retransmission au moyen de la seconde unité (15) lorsque la première unité (14) détermine que son terminal propre (10) est placé sous commande de retransmission et qui corrige l'information multi-diffusion au moyen d'une partie de l'information multi-diffusion qui est envoyée par l'appareil de délivrance d'information (20) et qui est transmise en réponse à une requête de retransmission au moyen d'un autre terminal radio (10) lorsque la première unité (14) détermine que son terminal propre (10) est placé hors commande de retransmission.
